# EUROPÄISCHE PATENTANMELDUNG

(11) **EP 1 818 764 A2**
(43) Veröffentlichungstag der Anmeldung: **15.08.2007**
(21) Anmeldenummer: 07001367.7
(22) Anmeldetag: 23.01.2007
(51) Int. Cl.: G06F 3/01

(54) **Haptisches Bedienelement und haptische Bedienvorrichtung**

(30) Priorität: 27.01.2006 DE 102006004135
(71) Anmelder: Volkswagen Aktiengesellschaft, 38436 Wolfsburg (DE)
(72) Erfinder: Michelitsch, Georg, 70599 Stuttgart (DE); Wengelnik, Heino, 38442 Wolfsburg (DE); Bohrer, Lorenz, 10623 Berlin (DE); Lilienthal, Jörg, 38518 Gifhorn (DE)
(74) Vertreter: Meyer, Enno

(57) **Zusammenfassung**

Ein haptisches Bedienelement zur Verwendung in einem Kraftfahrzeug, welches Steuersignale zum Steuern einer Kraftfahrzeugvorrichtung erzeugt, wobei das Bedienelement mindestens zwei vorbestimmte Formen annehmen kann und wobei jede vorbestimmte Form einem Bedienzustand der Bedieneinheit entspricht, weist eine ertastbaren Oberfläche (2) auf, wobei die Oberfläche (2, 3) zwei oder mehr unterschiedliche Ausgestaltungen aufweist, die haptisch erfassbar sind, und wobei jede Oberflächenausgestaltung einen Betriebszustand des Bedienelements (1) entspricht.

## Beschreibung

Die Erfindung betrifft ein haptisches Bedienelement nach dem Oberbegriff des Anspruchs 1 und eine haptische Bedienvorrichtung nach dem Oberbegriff des Anspruchs 9.

Bedienvorrichtungen mit einer oder einer Vielzahl von Bedienelementen oder Bedieneinheiten zum Erzeugen von Steuersignalen zum Steuern elektronischer Komponenten oder Funktionen eines Kraftfahrzeugs sind üblicher Bestandteil moderner Kraftfahrzeugen. Dabei werden Schalter, Tastaturen und Dreheinstellvorrichtungen sowie Touch-Screen-Bedienelemente in verschiedensten Ausführungen eingesetzt und in Kraftfahrzeugen zur Steuerung verschiedenster Kraftfahrzeugfunktionen durch den Fahrer oder Beifahrer verwendet.

In der einfachsten Ausführungsform einer Bedienvorrichtung eines Kraftfahrzeugs wird jeder Betriebsparameter der zu steuernden Funktion durch die Bedienung eines spezifischen Bedienelements verändert. Aufgrund der zunehmenden Funktionalität von Kraftfahrzeugvorrichtungen erhöht sich mit jeder neuen Funktion die Anzahl der Bedienelemente.

Zur Lösung dieses Problems werden vermehrt sogenannte Soft-Keys zum Steuern einer Vielzahl von Betriebsparametern einer Vorrichtung eingesetzt. Dabei kann der Status eines Soft-Keys zwischen verschiedenen Moden wechseln, wobei jeder Modus einen spezifischen, zu steuernden Parameter umfasst. Da der Hauptvorteil der Soft-Keys die verringerte Anzahl der benötigten Bedienelemente ist, werden sie vorzugsweise in Vorrichtungen eingesetzt, welche mit einem geringen Platz auskommen müssen, beispielsweise Mobiltelefone oder ähnliches.

Um es nun dem Benutzer zu ermöglichen, einen gewünschten Betriebsparameter zu steuern oder zu ändern, muss zusätzlich Information bereitgestellt werden, die es dem Benutzer ermöglicht, diejenigen Parameter zu identifizieren, die gerade vom Bedienelement betätigbar sind. Diese Information wird üblicherweise in einer Anzeige bereitgestellt, wobei das Bedienelement üblicherweise unterhalb oder neben der Anzeige angeordnet ist, so dass der Benutzer visuell den Zusammenhang zwischen dem Soft-Key und der aktuellen Belegung erfassen kann. Im Kraftfahrzeugbereich hat diese Lösung den Nachteil, dass der Benutzer, üblicherweise der Fahrzeugführer, diesen Zusammenhang optisch wahrnehmen muss, was zu einer Ablenkung seiner Aufmerksamkeit vom Verkehrsgeschehen führen kann.

Es stellt sich daher die Frage, wie zusätzliche Information an den Benutzer übermittelt werden kann, die es ihm ermöglicht, den Status des Bedienelements oder der Bedieneinheit auf andere als auf optische Weise zu erfassen. Hier könnte man an eine zusätzliche akustische Information denken, jedoch führt dies in einem Kraftfahrzeug auch nicht zu dem gewünschten Effekt, da diese akustische Information über den aktuellen Status des Soft-Keys permanent wiederholt werden müsste, was ebenfalls zu einer Ablenkung des Fahrzeugführers führen würde.

Als Lösungen kommen sogenannte haptische Bedien- oder Eingabeelemente in Betracht, bei denen der Benutzer eine Rückkopplung über den aktuellen Zustand der Vorrichtung durch "Fühlen" mittels Händen und Fingern erhält. Mit derartigen haptischen Schnittstellen erhält der Benutzer mit der Bedienung bzw. der Manipulation der Schnittstelle bzw. des haptischen Bedienelements eine Rückkopplung mittels seines Tastsinns über eine gerade durchgeführte Aktion. Eine derartige Rückkopplung lässt sich auch zum Übertragen von Informationen über den aktuellen Status der haptischen Bedieneinrichtung verwenden.

So zeigt die EP-A-1 182 535 eine haptische Eingabe-/Ausgabeeinheit zum Steuern einer Vorrichtung, die eine Einheit zur Positionbestimmung aufweist, so dass eine absolute oder eine relative Position der haptischen Ein-/Ausgabeeinheit einem Modus der Vorrichtung zugewiesen werden kann. Innerhalb eines derartigen Modus kann der Benutzer eine Aktion mittels eines Menüs auswählen, indem er auf der Anzeige der Vorrichtung den entsprechenden Menüpunkt auswählt.

Weiterhin zeigt die WO 2005/040954 A1 eine haptische Eingabevorrichtung zum Erzeugen einer Steuerinformation zum Steuern einer mit der Eingabevorrichtung verbundenen Einheit, wobei die Eingabevorrichtung ein Eingabeelement aufweist, das mindestens zwei vorbestimmte unterschiedliche äußere Formen annehmen kann, wodurch mindestens zwei Betriebsmodi dargestellt werden. In jedem Betriebsmodus kann eine Eingabe und damit ein Eingabesignal generiert und an eine Steuereinheit zum Steuern der entsprechenden Einheit erzeugt werden. Durch die äußere Form des bekannten haptischen Eingabeelements ist dem Benutzer intuitiv klar, zumindest nach einer gewissen Lernzeit, in welchem Betriebsmodus sich das Eingabeelement gerade befindet. Nachteilig bei der bekannten Vorrichtung ist deren komplexer Aufbau zum Erzeugen der verschiedenen äußeren dreidimensionalen Formen.

Der Erfindung liegt daher die Aufgabe zugrunde, eine haptische Bedieneinheit und eine entsprechende haptische Bedienvorrichtung für ein Kraftfahrzeug mit einer einfacheren Realisierung und intuitivem Bezug zu der zu bedienenden Kraftfahrzeugvorrichtung zu schaffen.

Diese Aufgabe wird durch ein haptisches Bedienelement mit den Merkmalen des Anspruchs 1 sowie durch eine haptische Bedienvorrichtung mit den Merkmalen des Anspruchs 9 gelöst. Bevorzugte Ausgestaltungen der Erfindung sind Gegenstand der Unteransprüche.

Das erfindungsgemäße haptische Bedienelement zur Verwendung in einem Kraftfahrzeug, erzeugt Steuersignale zum Steuern einer Kraftfahrzeugvorrichtung und weist mindestens eine ertastbare Oberfläche auf, wobei die ertastbare Oberfläche zwei oder mehr unterschiedliche Ausgestaltungen aufweist, die haptisch erfassbar sind, und wobei jede der mehreren Oberflächenausgestaltungen einem Betriebszustand des Bedienelements entspricht.

So kann beispielsweise eine erste Oberflächenausgestaltung durch eine glatte Oberfläche und eine zweite Ausgestaltung durch eine raue Oberfläche gebildet sein. Insbesondere kann das Bedienelement bewegliche Noppen aufweisen, die in der mindestens einen ertastbaren Oberfläche angeordnet und in ihr beweglich sind, so dass unterschiedliche Oberflächenausgestaltungen durch eine entsprechende Anordnung der Noppen in der ertastbaren Oberfläche erzielt werden. Beispielsweise kann eine erste Oberflächenausgestaltung durch versenkte Noppen, d.h. eine glatte Oberfläche, und eine weitere Oberflächenausgestaltung durch aus der Oberfläche herausragende Noppen, d.h. eine raue Oberfläche, gebildet werden. Weitere Oberflächenausgestaltungen lassen sich erreichen, in dem nur ein Teil der Noppen aus der Oberfläche herausragen, während der Rest versenkt bleibt.

Vorzugsweise wird das Bedienelement durch einen Drehregler gebildet, wobei die ertastbare Oberfläche durch die Seitenfläche des Drehreglers gebildet wird. Beispielsweise kann der Drehregler eine zylindrische Form haben, wobei die Mantelfläche des Zylinders die mit Noppen ausgestattete ertastbare Oberfläche bildet.

Eine weitere bevorzugte Ausgestaltung ist die Realisierung des haptischen Bedienelements als Hubtaste, wobei hier die vordere Stirnfläche der Hubtaste mit Noppen versehen ist und so als ertastbare Oberfläche dient.

Hat ein erfindungsgemäßes Bedienelement in seiner einfachsten Ausführungsform zwei haptisch unterschiedliche ertastbare Oberflächen, so kann beispielsweise die erhöhte Noppenstellung ein aktives Bedienelement und die versenkte Noppenstellung ein inaktives Bedienelement dem Benutzer signalisieren. Dadurch ist dem Benutzer intuitiv klar, in welchem Betriebszustand sich das Bedienelement befindet.

Eine erfindungsgemäße haptische Bedienvorrichtung für ein Kraftfahrzeug umfasst ein oder mehrere der oben beschriebenen haptischen Bedienelementen. Dabei kann die Bedienvorrichtung weitere Komponenten wie beispielsweise ein Display oder ähnliches aufweisen.

Bevorzugte Ausführungsformen der Erfindung werden nachfolgend anhand der Zeichnungen beschrieben. In den Figuren zeigt
- Fig. 1: ein als Drehregler ausgebildetes haptisches Bedienelement , und
- Fig. 2: ein als Hubtaste ausgebildetes haptisches Bedienelement.

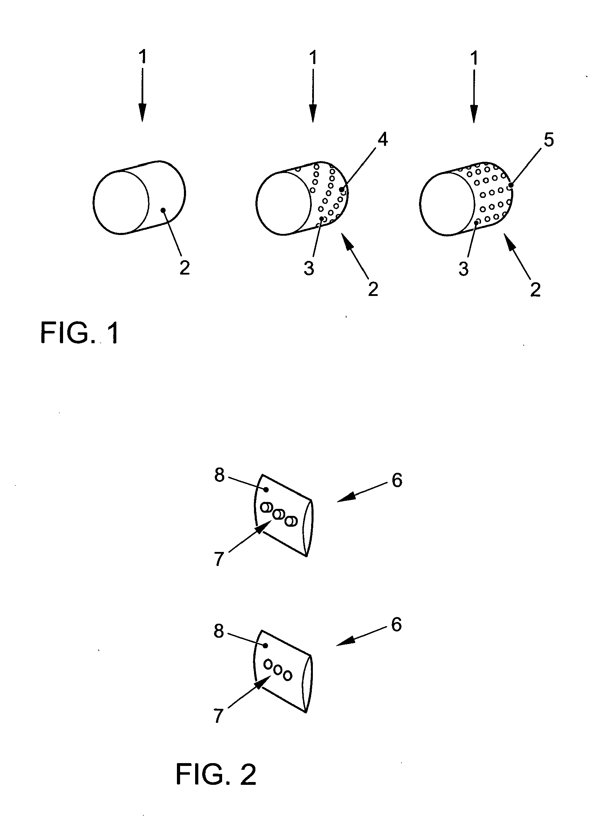

Fig. 1 zeigt eine perspektivische Darstellung eines erfindungsgemäßen Drehreglers 1, d.h. eines haptischen Bedienelements, mit einer zylindrischen Mantelfläche 2. Andere Ausgestaltungen der Form de Drehreglers 1 sind selbstverständlich möglich. In der linken Darstellung des Drehreglers 1 ist die Oberfläche der Mantelfläche 2 glatt. Der Benutzer hat also beim Anfassen der Mantelfläche 2 das Gefühl einer glatten Oberfläche. In der mittleren Darstellung der Hubtaste 1 sind in der Mantelfläche 2 angeordnete und aus dieser heraustretende Noppen 3 zu erkennen, die als eine Vielzahl schräg in der Mantelfläche 2 verlaufender, aus der Mantelfläche 2 herausragende Noppenreihen 4 angeordnet sind. Der Benutzer erfühlt beim Erfassen der Mantelfläche 2 eine Rauhigkeit, hervorgerufen durch die herausstehenden Noppenreihen 4. Im rechten Teil der Fig. 1 sind in dieser Ausführungsform alle Noppen 3 ausgefahren, d.h. treten aus der Manteloberfläche 2 hervor, was in diesem Beispiel zu Noppenreihen 5 führt, die parallel zur Achse des Drehreglers 1 führt. Dadurch, dass im linken Teil der Fig. 1 keine Noppen 3 aus der Manteloberfläche hervortreten, im mittleren Teil ein Teil der Noppen 3 ausgefahren sind und im rechten Teil der Fig. 1 alle Noppen ausgefahren sind, sind drei haptisch unterschiedliche Oberflächenausgestaltungen ertastbar, was dem Benutzer drei unterschiedliche Einstellungen des Drehreglers 1 signalisiert. Dabei sind die Noppen 3 in der Mantelfläche 2 beweglich angeordnet und werden durch einen geeigneten Mechanismus angetrieben. Durch eine entsprechende Ansteuerung der Noppen können so eine Vielzahl haptisch unterschiedlicher Oberflächenausgestaltungen erzeugt werden.

Fig. 2 zeigt eine Hubtaste 6 mit Noppen 7, die in der Frontfläche 8 der Hubtaste 6 angeordnet sind. Dabei sind im oberen Teil der Fig. 2 eine Reihe aus drei Noppen 7 im erhöhten Zustand dargestellt, so dass eine rauhe Oberfläche entsteht. Im unteren Teil der Fig. 2 sind dagegen die Noppen 7 in der Frontfläche 8 der Hubtaste 6 versenkt angeordnet, so dass eine glatte Oberfläche entsteht. Ordnet man nun den unterschiedlichen Oberflächen unterschiedliche Schaltzustände der Hubtaste6 zu, so kann der Benutzer daher haptisch den Schaltzustand des Hubtaste 6 erkennen.

### BEZUGSZEICHENLISTE

- 1: Drehregler
- 2: Mantelfläche
- 3: Noppen
- 4: schräge Noppenreihe
- 5: achsenparallele Noppenreihe
- 6: Hubtaste
- 7: Noppen
- 8: Frontfläche

## Patentansprüche

1. Haptisches Bedienelement zur Verwendung in einem Kraftfahrzeug, welches Steuersignale zum Steuern einer Kraftfahrzeugvorrichtung erzeugt,
**dadurch gekennzeichnet, daß**
das Bedienelement (1, 6) eine ertastbaren Oberfläche (2, 8) aufweist, wobei die Oberfläche (2, 8) zwei oder mehr unterschiedliche Ausgestaltungen aufweist, die haptisch erfassbar sind, und wobei jede Oberflächenausgestaltung einem Betriebszustand des Bedienelements (1, 6) entspricht.

2. Haptisches Bedienelement nach Anspruch 1, **dadurch gekennzeichnet, dass** die erste Oberflächenausgestaltung eine glatte Oberfläche und die zweite Ausgestaltung eine raue Oberfläche ist.

3. Haptisches Bedienelement nach Anspruch 1 oder 2, **dadurch gekennzeichnet, dass** das Bedienelement (1, 6) bewegliche Noppen (3, 7) aufweist, die in der ertastbaren Oberfläche (2, 8) angeordnet und relativ zu ihr beweglich sind, so dass die Oberflächenausgestaltung durch die Anordnung der Noppen (3, 7) in der ertastbaren Oberfläche (2, 8) bewirkt wird.

4. Haptisches Bedienelement nach Anspruch 3, **dadurch gekennzeichnet, dass** eine erste Oberflächenausgestaltung durch in der Oberfläche (2, 8) versenkte Noppen (3, 7) und weitere Oberflächenausgestaltungen durch aus der Oberfläche (2, 8) herausragende Noppen (4, 5) gebildet werden.

5. Haptisches Bedienelement nach einem der vorangegangenen Ansprüche, **dadurch gekennzeichnet, dass** das Bedienelement (1) durch einen Drehregler gebildet wird.

6. Haptisches Bedienelement nach Anspruch 5, **dadurch gekennzeichnet, dass** die ertastbare Oberfläche durch die Mantelfläche (2) des Drehreglers (1) gebildet wird.

7. Haptisches Bedienelement nach Anspruch 3 oder 4, **dadurch gekennzeichnet, dass** das Bedienelement eine Hubtaste (6) ist.

8. Haptisches Bedienelement nach Anspruch 7,**dadurch gekennzeichnet, dass** die ertastbare Oberfläche durch die Stirnfläche (8) der Hubtaste (6) gebildet wird.

9. Haptische Bedienvorrichtung für ein Kraftfahrzeug mit einem oder mehr haptischen Bedienelementen (1) nach einem der vorangegangenen Ansprüche.
